# EUROPEAN PATENT SPECIFICATION

(11) **EP 4 322 294 B1**
(45) Date of publication and mention of the grant of the patent: **27.05.2026**
(21) Application number: 22911772.6
(22) Date of filing: 15.12.2022
(51) Int. Cl.: H01M 50/107, H01M 50/636, B23K 26/20, H01M 50/169, H01M 10/04, B23K 26/21, B23K 26/244

(54) **SECONDARY BATTERY MANUFACTURING METHOD AND SECONDARY BATTERY**
VERFAHREN ZUR HERSTELLUNG EINER SEKUNDÄRBATTERIE UND SEKUNDÄRBATTERIE
PROCÉDÉ DE FABRICATION DE BATTERIE SECONDAIRE ET BATTERIE SECONDAIRE

(30) Priority: 21.12.2021 KR 20210183553
(43) Date of publication of application: 14.02.2024
(73) Proprietor: LG Energy Solution, Ltd., Seoul 07335 (KR)
(72) Inventor: KIM, Minchan, Daejeon 34122 (KR); PARK, Youngbin, Daejeon 34122 (KR); BAE, Kwan Hong, Daejeon 34122 (KR); JEONG, Young Jun, Daejeon 34122 (KR)
(74) Representative: Hoffmann Eitle
(86) International application number: PCT/KR2022/020439
(87) International publication number: WO 2023/121139

(56) References cited:
- JP-A- 2002 042 742
- JP-A- 2005 106 527
- KR-A- 20050 036 635
- KR-A- 20100 032 731
- KR-A- 20160 100 054
- KR-A- 20190 066 412
- KR-A- 20210 104 547
- US-A- 6 045 944
- US-A1- 2012 189 904

## Description

### [Technical Field]

The present application relates to a method of manufacturing a secondary battery and a secondary battery capable of minimizing an effect of an electrolyte solution.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and includes a nickel-cadmium battery, a nickel-hydrogen battery, a nickel-zinc battery, a lithium-ion battery, and the like, and the range of use thereof tends to be gradually expanding as mobile devices become more prevalent.

Among such secondary batteries, a lithium-ion secondary battery is in the limelight as a driving power source for mobile devices because it has excellent characteristics such as being rechargeable, lightweight, long lifespan, and high capacity. Accordingly, research and development efforts on the lithium-ion secondary battery are being actively conducted.

The lithium-ion secondary battery has a risk of explosion due to the nature of highly reactive lithium. There are various causes of explosion of the lithium-ion secondary battery, and one of them is an increase in internal gas pressure. Specifically, when an electrode is in an overcharge, overdischarge, or overcurrent state, a gas is generated inside the secondary battery due to heat generation or ignition of the electrode, and the generated gas may increase an internal pressure of the secondary battery, causing an explosion.

In order to prevent explosion due to the heat generation or ignition of the electrode of the secondary battery, a battery exterior cap is generally arranged on top of a cylindrical secondary battery and sealed by a method such as welding. That is, the secondary battery is maintained in a sealed state, so that the electrolyte solution or generated gas inside the battery can be prevented from flowing out to an outside.

When sealing the battery exterior cap with welding, the electrolyte solution remaining in a gap of an assembled portion may lead to a welding defect of the secondary battery. In the related art, a method of coupling the battery exterior cap to a battery casing, irradiating low-output laser to evaporate and remove the residual electrolyte solution and then performing sealing welding is implemented.

According to the method of the related art, the electrolyte solution may flow out during a delay time from the step of evaporating and removing the residual electrolyte solution to the main sealing welding step, so that the welding defect is still problematic. Therefore, there is a need for a method of manufacturing a secondary battery capable of effectively removing the residual electrolyte solution that causes a welding defect of the secondary battery and minimizing the effect thereof.

US 6 045 944 A concerns a battery and method of manufacturing the same. A battery case has a structure in which a metal lid is hermetically sealed to an opening portion of a metal outer jacket. An electrode member serving as an electric-power generating element is housed in the outer jacket of the battery case. A sealing lid made of a metal plate material is seam-welded to the outer surface of the lid including the electrolyte injection hole by a laser beam after an electrolyte is injected through the electrolyte injection hole of the lid. A weld portion having a closed loop is formed on the sealing lid by performing the laser beam from a start point to an end point so as to draw a closed loop approximated to a circle surrounding the electrolyte injection hole.

US 2012/189904 A1 concerns a secondary battery and method of manufacturing the same. The secondary battery includes an electrode body and a container housing the electrode body together with an electrolyte. A sealing lid is welded to a lid body with a laser beam in a ring shape.

### [Citation List]

### [Patent Document]

(Patent Literature 1) Korean Patent Application Publication No. 10-2005-0080516

### [Detailed Description of the Invention]

### [Technical Problem]

The present application relates to a method of manufacturing a secondary battery and a secondary battery capable of minimizing an effect of an electrolyte solution.

### [Technical Solution]

An embodiment of the present invention provides a method of manufacturing a secondary battery as defined in claim 1. The method of manufacturing a secondary battery includes the steps of inserting a battery assembly into a battery casing; injecting an electrolyte solution into the battery casing; arranging a battery exterior cap with an electrode in an opening of the battery casing; and welding and sealing the battery exterior cap along a circular trajectory, in which the sealing step includes steps of forming a spot-shaped or tail-shaped welding trajectory beginning portion on the battery exterior cap, and performing welding along the circular trajectory from the welding trajectory beginning portion. The spot-shaped or tail-shaped welding trajectory beginning portion is formed on an inner side of the circular welding trajectory of the battery exterior cap.

Another embodiment of the present invention provides a secondary battery as defined in claim 6. The secondary battery includes a battery casing in which a battery assembly is inserted; a battery exterior cap in an opening of the battery casing, the battery exterior cap has a circular shape; and a welded part sealing the battery casing and the battery exterior cap, the welded part having a form welded along a circular trajectory of the battery exterior cap, and the welded part includes a spot-shaped or tail-shaped welding trajectory beginning portion. The spot-shaped or tail-shaped welding trajectory beginning portion is formed on an inner side of the circular welding trajectory of the battery exterior cap.

### [Advantageous Effects]

The method of manufacturing a secondary battery according to the exemplary embodiment of the present invention is a method of performing welding along the circular trajectory including the spot-shaped or tail-shaped welding trajectory beginning portion on an inner side of the circular welding trajectory of the battery exterior cap.

By starting welding from a portion deviating from the circular trajectory for sealing, the electrolyte solution in a gap of an assembled portion between the battery casing and the battery exterior cap is evaporated and removed, and sealing welding can be performed simultaneously without delay time. That is, there is an advantage of effectively minimizing the effect of the residual electrolyte solution when sealing welding the secondary battery.

### [Brief Description of Drawings]

FIG. 1 is a welding trajectory for welding a battery exterior cap according to an exemplary embodiment of the present application, showing a tail-shaped welding trajectory beginning portion.
FIG. 2 is a welding trajectory for welding a battery exterior cap according to the exemplary embodiment of the present application, showing a spot-shaped welding trajectory beginning portion.
FIG. 3 is an enlarged view of a welded part of a battery exterior cap according to the exemplary embodiment of the present application.
FIG. 4 is an enlarged view of a welded part of a battery exterior cap welded by a method of the related art without including the tail-shaped or spot-shaped welding trajectory beginning portion according to the present application.
FIG. 5 is an enlarged view of a state in which a battery exterior cap according to the present application is arranged in an opening of a battery casing before sealing.
FIG. 6 is an enlarged view of the tail-shaped welding trajectory beginning portion according to the exemplary embodiment of the present application.

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

Hereinafter, the exemplary embodiments of the present invention will be described in detail with reference to the drawings so that one skilled in the art can readily implement the present invention. However, the present invention may be embodied in various different forms, and is not limited to the following descriptions.

A method of manufacturing a secondary battery according to an exemplary embodiment of the present invention includes the steps of inserting a battery assembly into a battery casing; injecting an electrolyte solution into the battery casing; arranging a battery exterior cap with an electrode in an opening of the battery casing; and welding and sealing the battery exterior cap along a circular trajectory, in which the sealing step includes steps of forming a spot-shaped or tail-shaped welding trajectory beginning portion on the battery exterior cap, and performing welding along the circular trajectory from the welding trajectory beginning portion.

The method of manufacturing a secondary battery according to the exemplary embodiment of the present invention includes a step of inserting a battery assembly into a battery casing.

In the step of inserting the battery assembly into the battery casing, the battery casing may have various shapes such as a cylindrical shape, a prismatic shape, and a pouch, but preferably, has a cylindrical shape.

In the step of inserting the battery assembly into the battery casing, the battery assembly is a power generation device capable of charging and discharging, and may include a positive electrode, a negative electrode, and a separator.

The battery assembly may be formed in an assembled form in which a positive electrode, a separator, and a negative electrode are alternately layered. For example, the battery assembly may have such a form that the separator is folded in a zigzag pattern and a positive electrode and a negative electrode are alternately arranged between the folded separator.

The positive electrode may include a positive electrode current collector layer and a positive electrode active material layer, and the positive electrode active material layer may include a positive electrode active material.

A material of the positive electrode current collector layer is not particularly limited as long as it has conductivity without causing a chemical change in the battery. For example, copper, stainless steel, aluminum, nickel, titanium, fired carbon, copper, aluminum or stainless steel each surface treated with carbon, nickel, titanium, silver, or the like, or the like may be used.

The positive electrode current collector layer may have microscopic irregularities formed on a surface to enhance an adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. The positive electrode active material is a compound capable of reversible intercalation and deintercalation of lithium, and specifically, may include a lithium transition metal composite oxide including lithium and at least one transition metal of nickel, cobalt, manganese or aluminum. More specifically, the lithium transition metal composite oxide may include lithium and a transition metal including nickel, cobalt, and manganese. Specifically, the lithium transition metal composite oxide may be a lithium-manganese-based oxide (for example, LiMnO₂, LiMn₂O₄, etc.), a lithium-cobalt-based oxide (for example, LiCoO₂, etc.), a lithium-nickel-based oxide (for example, LiNiO₂, etc.), a lithium-nickel-manganese-based oxide (for example, LiNi_{1-Y}Mn_{Y}O₂ (where, 0<Y<1), LiMn_{2-Z}Ni_{Z}O₄ (where 0<Z<2, etc.), a lithium-nickel-cobalt-based oxide (for example, LiNi_{1-Y1}Co_{Y1}O₂ (where, 0<Y1<1, etc.), a lithium-manganese-cobalt-based oxide (for example, LiCo_{1-Y2}Mn_{Y2}O₂ (where, 0<Y2<1), LiMn_{2-Z1}Co_{Z1}O₄ (where, 0<Z1<2, etc.), a lithium-nickel-manganese-cobalt-based oxide (for example, Li(NiₚCo_{q}Mnᵣ₁)O₂ (where, 0<p<1, 0<q<1, 0<r1<1, p+q+r1=1) or Li (Niₚ₁Co_{q1}Mnᵣ₂)O₄ (where 0<p1<2, 0<q1<2, 0<r2<2, p1+q1+r2=2, etc.), or a lithium-nickel-cobalt-transition metal (M) oxide (for example, Li(Niₚ₂Co_{q2}Mnᵣ₃M_{S2})O₂ (where M is selected from the group consisting of Al, Fe, V, Cr, Ti, Ta, Mg and Mo, and p2, q2, r3 and s2 are atomic fractions of independent elements, 0<p2<1, 0<q2<1, 0<r3<1, 0<s2<1, p2+q2+r3+s2=1, etc.), and may include any one thereof or a compound of two or more thereof. Among them, the lithium transition metal composite oxide may be LiCoO₂, LiMnO₂, LiNiO₂, a lithium nickel-manganese-cobalt oxide (for example,

Li(Ni_{0.6}Mn_{0.2}CO_{0.2})O₂, Li(Ni_{0.5}Mn_{0.3}CO_{0.2})O₂, Li(Ni_{0.7}Mn_{0.15}Co_{0.15})O₂ or Li(Ni_{0.8}Mn_{0.1}Co_{0.1})O₂, etc.), or a lithium-nickel-cobalt-aluminum oxide (for example, Li(Ni_{0.8}Co_{0.15}Al_{0.05})O₂, etc.), or the like in that it can improve the capacity characteristics and stability of the battery, and the lithium transition metal composite oxide may be Li(Ni_{0.6}Mn_{0.2}Co_{0.2})O₂, Li(Ni_{0.5}Mn_{0.3}CO_{0.2})O₂, Li(Ni_{0.7}Mn_{0.15}Co_{0.15})O₂ or Li(Ni_{0.8}Mn_{0.1}Co_{0.1})O₂ or the like, considering the remarkable improvement effect achieved by controlling the types and content ratios of the constituent elements forming the lithium transition metal composite oxide, and any one thereof or a mixture of two or more thereof may be used.

The negative electrode may include a negative electrode current collector layer and a negative electrode active material layer, and the negative electrode active material layer may include a negative electrode active material.

A material of the negative electrode current collector layer is not particularly limited as long as it has high conductivity without causing a chemical change in the battery. For example, copper, stainless steel, aluminum, nickel, titanium, fired carbon, copper or stainless steel each surface treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

The negative electrode active material may be a negative electrode active material that is typically used, and a compound capable of reversible intercalation and deintercalation may be used. Specifically, the negative electrode active material may include one or a mixture of two or more species selected from the group consisting of a carbon-based active material, a silicon-based active material, a metal-based active material capable of alloying with lithium, and a lithium-containing nitride.

The carbon-based active material may include artificial graphite, natural graphite, hard carbon, soft carbon, carbon black, acetylene black, Ketjen black, super P, graphene, and fibrous carbon.

The silicon-based active material may include silicon, a silicon alloy, and a compound represented by SiB4, SiB6, Mg₂Si, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOx (0<x<2).

The metal-based active material may include Al, Sn, Ag, Bi, Mg, Zn, In, Ge, Pb, Pd, Pt, Ti, Sb, Ga, Mn, Fe, Co, Ni, Cu, Sr or Ba, etc. These may be used in any form, such as a single element, an alloy, an oxide, a nitride, a sulfide, a boride, or an alloy with lithium.

The positive electrode active material layer and the negative electrode active material layer each may further include a conductive material and a binder.

The conductive material is used to impart conductivity to an electrode, and can be used without particular limitation as long as it has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

The binder may include at least one selected from the group consisting of polyvinylidenefluoride-hexafluoropropylene copolymer (PVDF-co-HFP), polyvinylidenefluoride (PVDF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, propylene polymer, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na or Ca, etc., and may also include various copolymers thereof.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

A method of manufacturing a secondary battery according to the exemplary embodiment of the present invention includes a step of injecting an electrolyte solution into the battery casing.

In the step of injecting the electrolyte solution into the battery casing, examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of a lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂₋, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

The method of manufacturing a secondary battery according to the exemplary embodiment of the present invention includes a step of arranging a battery exterior cap with an electrode in an opening of the battery casing.

In the step of arranging the battery exterior cap with an electrode in the opening of the battery casing, the battery exterior cap is arranged to cover the entire opening of the battery casing.

In the step of arranging the battery exterior cap with an electrode in the opening of the battery casing, the battery exterior cap may have a circular shape, and the shape of the battery exterior cap matches a shape of the opening of the battery casing.

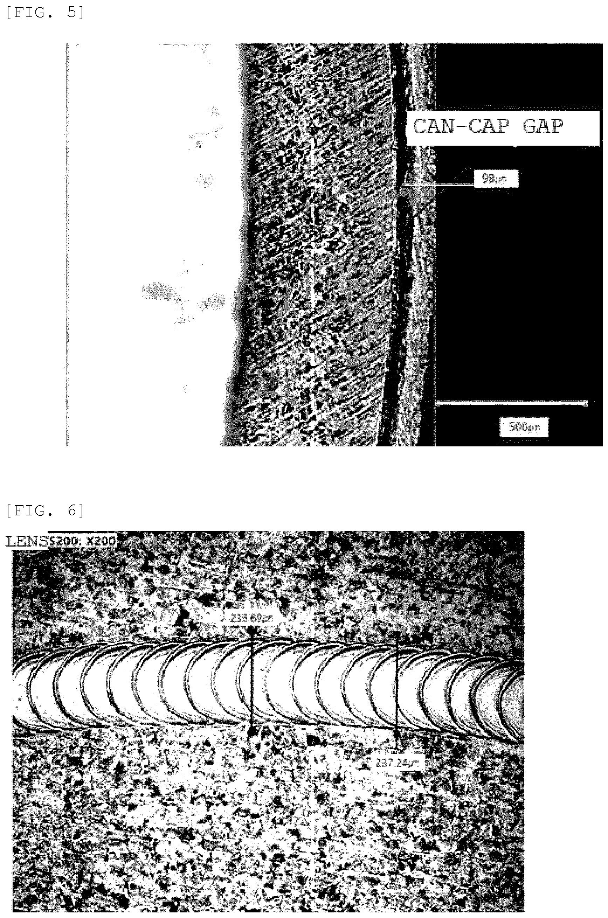

FIG. 5 is an enlarged view of a state in which a battery exterior cap is arranged in an opening of a battery casing before sealing. In the enlarged view, a gap between the battery exterior cap and the battery casing can be confirmed.

The method of manufacturing a secondary battery according to the exemplary embodiment of the present invention includes a step of welding and sealing the battery exterior cap along a circular trajectory.

The step of welding and sealing the battery exterior cap along the circular trajectory includes steps of forming a spot-shaped or tail-shaped welding trajectory beginning portion on the battery exterior cap, and performing welding along the circular trajectory from the welding trajectory beginning portion.

The method of manufacturing a secondary battery according to the exemplary embodiment of the present invention includes a step of forming a spot-shaped or tail-shaped welding trajectory beginning portion on the battery exterior cap.

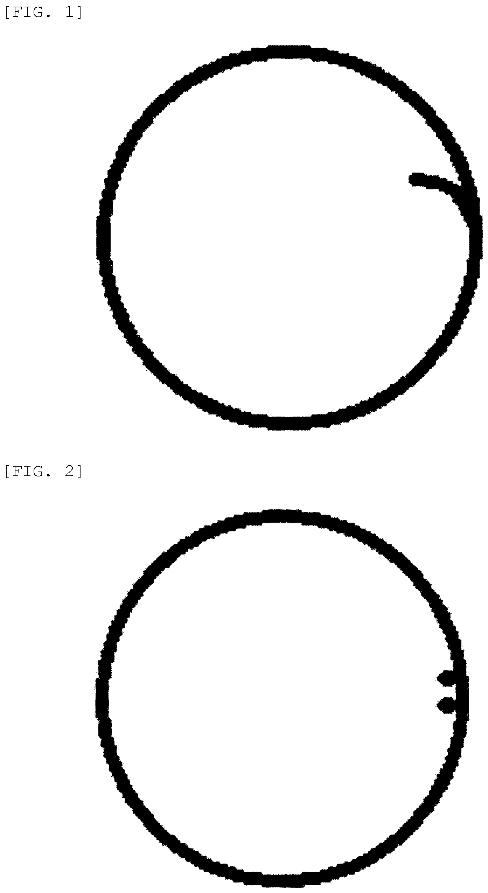

In the step of forming the spot-shaped or tail-shaped welding trajectory beginning portion on the battery exterior cap, the tail-shaped welding trajectory beginning portion is formed on an inner side of a circular trajectory for sealing of the battery exterior cap, as shown in FIG. 1.

In the step of forming the spot-shaped or tail-shaped welding trajectory beginning portion on the battery exterior cap, the spot-shaped welding trajectory beginning portion is formed on an inner side of a circular trajectory for sealing of the battery exterior cap, as shown in FIG. 2.

As described above, in the method of manufacturing a secondary battery according to the present invention, the spot-shaped or tail-shaped welding trajectory beginning portion is formed on the battery exterior cap deviating from the circular trajectory for sealing. Accordingly, the generated conduction heat can evaporate and remove the electrolyte solution in a gap of an assembled portion between the battery casing and the battery exterior cap.

The method of manufacturing a secondary battery according to the exemplary embodiment of the present invention includes a step of performing welding along the circular trajectory from the welding trajectory beginning portion.

The step of performing welding along the circular trajectory from the welding trajectory beginning portion is a step of performing welding along the circular trajectory for enabling sealing of a gap of an assembled portion between the battery casing and the battery exterior cap.

In the step of performing welding along the circular trajectory from the welding trajectory beginning portion, a general welding method for sealing the secondary battery may be used for the welding.

FIGS. 1 and 2 show a circular trajectory along which welding is performed from the tail-shaped or spot-shaped welding trajectory beginning portion.

If the electrolyte solution remains in the gap of the assembled portion of the secondary battery, it may lead to a welding defect of the secondary battery. In the related art, a method of coupling the battery exterior cap to a battery casing, irradiating low-output laser to evaporate and remove the residual electrolyte solution and then performing sealing welding is implemented. According to the method of the related art, the electrolyte solution may flow out during a delay time from the step of evaporating and removing the residual electrolyte solution to the main sealing welding step, so that the welding defect is still problematic.

However, according to the present invention, the spot-shaped or tail-shaped welding trajectory beginning portion is formed on the battery exterior cap. Therefore, the electrolyte solution in the gap of the assembled portion between the battery casing and the battery exterior cap is removed and welding can be performed along the circular trajectory from the welding trajectory beginning portion without delay time, so that the effect of the residual electrolyte solution can be minimized.

In the method of manufacturing a secondary battery according to the exemplary embodiment of the present invention, laser welding may be used in the step of sealing and welding the battery exterior cap along a circular trajectory.

In the method of manufacturing a secondary battery according to the exemplary embodiment of the present invention, after the step of forming a welding trajectory beginning portion, an ambient temperature of the welding trajectory beginning portion of the battery exterior cap may be 50°C or higher and 2,000°C or lower.

In the method of manufacturing a secondary battery according to another exemplary embodiment, the ambient temperature of the welding trajectory beginning portion of the battery exterior cap in the step of forming a welding trajectory beginning portion may be 50°C or higher and 1,700°C or lower.

In the method of manufacturing a secondary battery according to another exemplary embodiment, the ambient temperature of the welding trajectory beginning portion of the battery exterior cap in the step of forming a welding trajectory beginning portion may be 50°C or higher and 1,400°C or lower.

In the method of manufacturing a secondary battery according to another exemplary embodiment, the ambient temperature of the welding trajectory beginning portion of the battery exterior cap in the step of forming a welding trajectory beginning portion may be 50°C or higher and 1,100°C or lower.

In the method of manufacturing a secondary battery according to another exemplary embodiment, the ambient temperature of the welding trajectory beginning portion of the battery exterior cap in the step of forming a welding trajectory beginning portion may be 50°C or higher and 800°C or lower.

In the method of manufacturing a secondary battery according to another exemplary embodiment, the ambient temperature of the welding trajectory beginning portion of the battery exterior cap in the step of forming a welding trajectory beginning portion may be 50°C or higher and 500°C or lower.

The ambience of the welding trajectory beginning portion of the battery exterior cap refers to a portion adjacent to the welding trajectory beginning portion, to which heat is transferred when forming the welding trajectory beginning portion on the battery exterior cap by laser welding.

In the step of forming the welding trajectory beginning portion, a temperature of the battery exterior cap is raised by conduction heat generated during welding, and the electrolyte solution is evaporated and removed.

In the method of manufacturing a secondary battery according to the exemplary embodiment of the present invention, a laser wavelength range of laser used in laser welding may be 100 nm or longer and 1,500 nm or shorter. When a laser wavelength within the above range is used, it is possible to effectively perform the removal of the residual electrolyte solution and the sealing without affecting an inside of the can, such as damage to the separator.

In the method of manufacturing a secondary battery according to the exemplary embodiment of the present invention, laser energy of laser used in the laser welding may be 0.01 J or more and 150 J or less. The laser energy may be changed according to conditions such as a pulse width of laser, and is not limited to the energy described above.

In the method of manufacturing a secondary battery according to the exemplary embodiment of the present invention, a laser speed of laser used in the laser welding may be 10 mm/sec or more and 10,000 mm/sec or less. A welding speed may be adjusted according to conditions such as an output and a wavelength of laser, and is not limited to the speed described above.

A secondary battery according to the exemplary embodiment of the present invention includes a battery casing in which a battery assembly is inserted; a battery exterior cap in an opening of the battery casing, the battery exterior cap has a circular shape; and a welded part sealing the battery casing and the battery exterior cap, the welded part having a form welded along a circular trajectory of the battery exterior cap, and the welded part includes a spot-shaped or tail-shaped welding trajectory beginning portion.

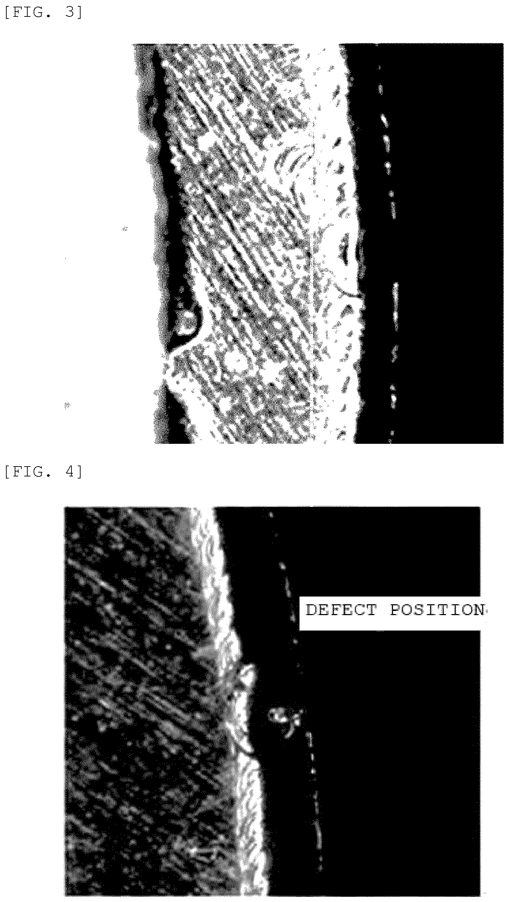

FIG. 3 is a welding trajectory according to the exemplary embodiment of the present invention and an enlarged view thereof.

FIG. 4 shows a welding defect resulting from a welding method of the related art.

In the secondary battery according to the exemplary embodiment of the present invention, a size of the spot-shaped welding trajectory beginning portion may be 1 µm or greater and 1,000 µm or less.

In the secondary battery according to the exemplary embodiment of the present invention, a size of the tail-shaped welding trajectory beginning portion may be 1 µm or greater and 1,000 µm or less.

The size of the spot-shaped and tail-shaped welding trajectory beginning portions means a size of a weld bead formed by laser welding. For example, FIG. 6 is an enlarged view of a tail-shaped welding trajectory beginning portion according to the exemplary embodiment of the present invention, in which it is observed that a size of the weld bead, i.e., a size of the welding trajectory beginning portion is 230 µm.

In the secondary battery according to the exemplary embodiment of the present invention, the weld bead or bead refers to deposited metal formed on a base material to be welded by welding.

As described above, the present invention relates to a method for performing welding along a circular trajectory including a spot-shaped or tail-shaped welding trajectory beginning portion on an inner side of the circular welding trajectory on a battery exterior cap, and a secondary battery according to the method.

By starting welding from a portion deviating from the circular trajectory for sealing, the electrolyte solution in a gap of an assembled portion between the battery casing and the battery exterior cap is evaporated and removed, and sealing welding can be performed simultaneously without delay time. That is, it is possible to effectively minimize the effect of the residual electrolyte solution when sealing welding the secondary battery.

Hereinafter, examples are provided to specifically describe the present specification. However, examples according to the present specification may be modified in other forms, and the scope of the present application is not limited to the following examples. The examples of the present application are provided to more completely explain the present specification to one skilled in the art.

### <Example 1>

### 1) Insertion of a battery assembly into a battery casing

A positive electrode slurry was applied to an aluminum thin film serving as a positive electrode current collector, dried, and then roll-pressed to manufacture a positive electrode. A negative electrode slurry was applied to a copper thin film serving as a negative electrode current collector, dried, and then roll-pressed to manufacture a negative electrode. After manufacturing a battery assembly by sequentially laminating the positive electrode, a separator, and the negative electrode, the battery assembly was inserted into a battery casing.

### 2) Injection of an electrolyte solution into the battery casing

An electrolyte solution was injected into the battery casing in which the battery assembly was inserted.

### 3) Arranging of a battery exterior cap with an electrode in an opening of the battery casing

A battery exterior cap had a circular shape that matched a shape of an opening of the battery casing, and was arranged to cover the opening of the battery casing.

### 4) Welding and sealing of the battery exterior cap along a circular trajectory

A tail-shaped welding trajectory beginning portion was formed on an inner side of a sealing/welding circular trajectory on the battery exterior cap (laser output 60W, processing speed 70 mm/s, wavelength 1060 nm). As can be seen in FIG. 6, the size of the tail-shaped beginning portion was 230 µm.

Subsequently, the battery exterior cap was sealed to the battery casing by performing laser welding under conditions of the output of 60 W, the processing speed of 70 mm/s, and the wavelength of 1060 nm along the circular trajectory from the tail-shaped welding trajectory beginning portion.

FIG. 3 is an enlarged view of a welded part of a secondary battery including the tail-shaped welding trajectory beginning portion that was sealed and completed.

### <Comparative Example 1>

A secondary battery was manufactured in the same manner as in the Example, except that the residual electrolyte solution was removed with low-power (15W) laser, instead of forming the welding trajectory beginning portion on the battery exterior cap.

FIG. 4 is an enlarged view of a welded part of the secondary battery.

FIG. 5 is an enlarged view of a state in which a battery exterior cap is arranged in an opening of a battery casing before sealing. In the enlarged view, a gap between the battery exterior cap and the battery casing can be confirmed.

In the case (Comparative Example 1) in which the electrolyte solution was evaporated and removed with the low-output laser of the related art without forming the welding trajectory beginning portion according to the present invention, holes were observed at the welded part, as shown in FIG. 4, due to the residual electrolyte solution in the gap between the battery casing and the battery exterior cap, and bead was not properly formed, resulting in poor sealing.

On the other hand, in the case (Example 1) in which the tail-shaped welding trajectory beginning portion was formed according to the present invention and the electrolyte solution was removed by the conduction heat, as can be seen in FIG. 3, the battery casing and the battery exterior cap could be sealed therebetween without any effect of the residual electrolyte solution in the gap.

## Claims

1. A method of manufacturing a secondary battery comprising:
inserting a battery assembly into a battery casing;
injecting an electrolyte solution into the battery casing;
arranging a battery exterior cap with an electrode in an opening of the battery casing; and
welding and sealing the battery exterior cap along a circular trajectory,
the sealing comprising forming a welding trajectory beginning portion on the battery exterior cap, and performing welding along the circular trajectory from the welding trajectory beginning portion, wherein the welding trajectory beginning portion is spot-shaped or tail-shaped, and **characterized in that**
the spot-shaped or tail-shaped welding trajectory beginning portion is formed on an inner side of the circular welding trajectory of the battery exterior cap.

2. The method of manufacturing a secondary battery of claim 1, wherein laser welding is used in the sealing.

3. The method of manufacturing a secondary battery of claim 1, wherein an ambient temperature of the welding trajectory beginning portion of the battery exterior cap is 50°C or higher and 2,000°C or lower after the forming of the welding trajectory beginning portion.

4. The method of manufacturing a secondary battery of claim 2, wherein a laser wavelength range of laser used in the laser welding is 100 nm or longer and 1,500 nm or shorter.

5. The method of manufacturing a secondary battery of claim 2, wherein pulse laser energy of laser used in the laser welding is 0.01 J or more and 150 J or less.

6. A secondary battery comprising:
a battery casing including a battery assembly;
a battery exterior cap in an opening of the battery casing, the battery exterior cap has a circular shape; and
a welded part sealing the battery casing and the battery exterior cap,
the welded part having a form welded along a circular trajectory of the battery exterior cap, and the welded part comprises a spot-shaped or tail-shaped welding trajectory beginning portion, and
**characterized in that** the spot-shaped or tail-shaped welding trajectory beginning portion is formed on an inner side of the circular welding trajectory of the battery exterior cap.

7. The secondary battery of claim 6, wherein the spot-shaped welding trajectory beginning portion has a size of 1 µm or greater and 1,000 µm or less.

8. The secondary battery of claim 6, wherein the tail-shaped welding trajectory beginning portion has a size of 1 µm or greater and 1,000 µm or less.

## Patentansprüche

1. Verfahren zur Herstellung einer Sekundärbatterie, umfassend:
Einführen einer Batterieanordnung in ein Batteriegehäuse;
Einspritzen einer Elektrolytlösung in das Batteriegehäuse;
Anordnen eines äußeren Batteriedeckels mit einer Elektrode in einer Öffnung des Batteriegehäuses; und
Verschweißen und Abdichten des äußeren Batteriedeckels entlang einer kreisförmigen Bahn,
wobei das Abdichten das Ausbilden eines Anfangsabschnitts der Schweißbahn an dem äußeren Batteriedeckel und das Durchführen eines Schweißvorgangs entlang der kreisförmigen Bahn von dem Anfangsabschnitt der Schweißbahn aus umfasst, wobei der Anfangsabschnitt der Schweißbahn punktförmig oder schwanzförmig ist, und **dadurch gekennzeichnet, dass**
der punktförmige oder schwanzförmige Anfangsabschnitt der Schweißbahn auf einer Innenseite der kreisförmigen Schweißbahn des äußeren Batteriedeckels gebildet ist.

2. Verfahren zur Herstellung einer Sekundärbatterie nach Anspruch 1, wobei beim Abdichten Laserschweißen verwendet wird.

3. Verfahren zur Herstellung einer Sekundärbatterie nach Anspruch 1, wobei eine Umgebungstemperatur des Anfangsabschnitts der Schweißbahn des äußeren Batteriedeckels nach dem Ausbilden des Anfangsabschnitts der Schweißbahn 50 °C oder höher und 2.000 °C oder niedriger ist.

4. Verfahren zur Herstellung einer Sekundärbatterie nach Anspruch 2, wobei ein Laserwellenlängenbereich des beim Laserschweißen verwendeten Lasers 100 nm oder länger und 1.500 nm oder kürzer ist.

5. Verfahren zur Herstellung einer Sekundärbatterie nach Anspruch 2, wobei eine Pulslaserenergie des beim Laserschweißen verwendeten Lasers 0,01 J oder mehr und 150 J oder weniger ist.

6. Sekundärbatterie, umfassend:
ein Batteriegehäuse einschließlich einer Batterieanordnung;
einen äußeren Batteriedeckel in einer Öffnung des Batteriegehäuses, wobei der äußere Batteriedeckel eine kreisförmige Gestalt aufweist; und
einen Schweißbereich, der das Batteriegehäuse und den äußeren Batteriedeckel abdichtet,
wobei der Schweißbereich eine entlang einer kreisförmigen Bahn des äußeren Batteriedeckels verschweißte Form aufweist, und der Schweißbereich einen punktförmigen oder schwanzförmigen Anfangsabschnitt der Schweißbahn umfasst, und
**dadurch gekennzeichnet, dass** der punktförmige oder schwanzförmige Anfangsabschnitt der Schweißbahn auf einer Innenseite der kreisförmigen Schweißbahn des äußeren Batteriedeckels gebildet ist.

7. Sekundärbatterie nach Anspruch 6, wobei der punktförmige Anfangsabschnitt der Schweißbahn eine Größe von 1 µm oder größer und 1.000 µm oder kleiner aufweist.

8. Sekundärbatterie nach Anspruch 6, wobei der schwanzförmige Anfangsabschnitt der Schweißbahn eine Größe von 1 µm oder größer und 1.000 µm oder kleiner aufweist.

## Revendications

1. Procédé de fabrication d'une batterie secondaire comprenant :
l'insertion d'un ensemble batterie dans un boîtier de batterie ;
l'injection, dans le boîtier de batterie, d'une solution électrolytique ;
la disposition, dans une ouverture du boîtier de batterie, d'un capot extérieur de batterie muni d'une électrode ; et
le soudage et le scellement du capot extérieur de batterie le long d'une trajectoire circulaire,
le scellement comprenant le fait de former, sur le capot extérieur de batterie, une portion de début de trajectoire de soudage, et de réaliser un soudage le long de la trajectoire circulaire à partir de la portion de début de trajectoire de soudage, la portion de début de trajectoire de soudage étant de forme ponctuelle ou en forme de queue, et **caractérisé en ce que**
la portion de début de trajectoire de soudage de forme ponctuelle ou en forme de queue est formée sur un côté interne de la trajectoire de soudage circulaire du capot extérieur de batterie.

2. Procédé de fabrication d'une batterie secondaire selon la revendication 1, dans lequel un soudage laser est utilisé pour le scellement.

3. Procédé de fabrication d'une batterie secondaire selon la revendication 1, dans lequel une température ambiante de la portion de début de trajectoire de soudage du capot extérieur de batterie est de 50 °C ou plus et de 2000° C ou moins après le formage de la portion de début de trajectoire de soudage.

4. Procédé de fabrication d'une batterie secondaire selon la revendication 2, dans lequel une plage de longueurs d'onde laser du laser utilisé pour le soudage laser est de 100 nm ou plus et de 1500 nm ou moins.

5. Procédé de fabrication d'une batterie secondaire selon la revendication 2, dans lequel une énergie laser pulsée du laser utilisé pour le soudage laser est de 0,01 J ou plus et de 150 J ou moins.

6. Batterie secondaire comprenant :
un boîtier de batterie incluant un ensemble batterie ;
un capot extérieur de batterie dans une ouverture du boîtier de batterie, le capot extérieur de batterie présente une forme circulaire ; et
une partie soudée scellant le boîtier de batterie et le capot extérieur de batterie,
la partie soudée présentant une forme soudée le long d'une trajectoire circulaire du capot extérieur de batterie, et la partie soudée comprend une portion de début de trajectoire de soudage de forme ponctuelle ou en forme de queue, et
**caractérisée en ce que** la portion de début de trajectoire de soudage de forme ponctuelle ou en forme de queue est formée sur un côté interne de la trajectoire de soudage circulaire du capot extérieur de batterie.

7. Batterie secondaire selon la revendication 6, dans laquelle la portion de début de trajectoire de soudage de forme ponctuelle présente une dimension de 1 µm ou plus et de 1000 µm ou moins.

8. Batterie secondaire selon la revendication 6, dans laquelle la portion de début de trajectoire de soudage de forme de queue présente une dimension de 1 µm ou plus et de 1000 µm ou moins.
